Europäisches Patentamt

European Patent Office

Office européen des brevets

(19)

(11) Publication number: **0 460 302 A1**

# EUROPEAN PATENT APPLICATION

(12)

(21) Application number: **90202756.4**

(22) Date of filing: **15.10.90**

(51) Int. Cl.5: **A01G 9/24, F16B 7/04**

(30) Priority: **06.06.90 NL 9001279**

(43) Date of publication of application:
**11.12.91 Bulletin 91/50**

(84) Designated Contracting States:
**BE DE DK FR GB NL**

(71) Applicant: **Brabander, Apolonia Maria**
**Barch 7**
**NL-3155 BB Maasland(NL)**

(72) Inventor: **Bom, Petrus Leonardus Josef**
**Barch 7**
**NL-3155 BB Maasland(NL)**

(74) Representative: **Konings, Lucien Marie**
**Cornelis Joseph et al**
**OCTROOIBUREAU ARNOLD & SIEDSMA**
**Sweelinckplein 1**
**NL-2517 GK Den Haag(NL)**

(54) **Window operating device.**

(57) A window operating device for a glasshouse, comprising per window three opening rods (11, 31) which are connected via coupling means (55) to a window operating rod (24), is constructed such that the window is simply fitted in a set position relative to the window operating rod, since a clamp consisting of two clamping jaws (56) is fixed to the middle opening rod (11) of the three opening rods by means of a clamping bolt (58) passing through the two clamping jaws and this middle opening rod, while two outer opening rods are clamped fixedly in hollows (61) arranged in the clamp on either side of the clamping bolt.

FIG.3

EP 0 460 302 A1

The invention relates to a window operating device for a glasshouse comprising per window three opening rods which are connected via coupling means to a window operating rod.

The invention provides a simple device which is easy to fit and wherewith the relevant window can be held fixedly in a set position relative to the window operating rod. To this end the window operating device according to the invention has the feature that a clamp consisting of two clamping jaws is fixed on the middle opening rod of the three opening rods by means of a clamping bolt passing through the two clamping jaws and this middle opening rod, while two outer opening rods are clamped fixedly in hollows arranged in the clamp on either side of the clamping bolt.

Mentioned and other features according to the invention will become apparent from the description following hereinafter with reference to a drawing, wherein:

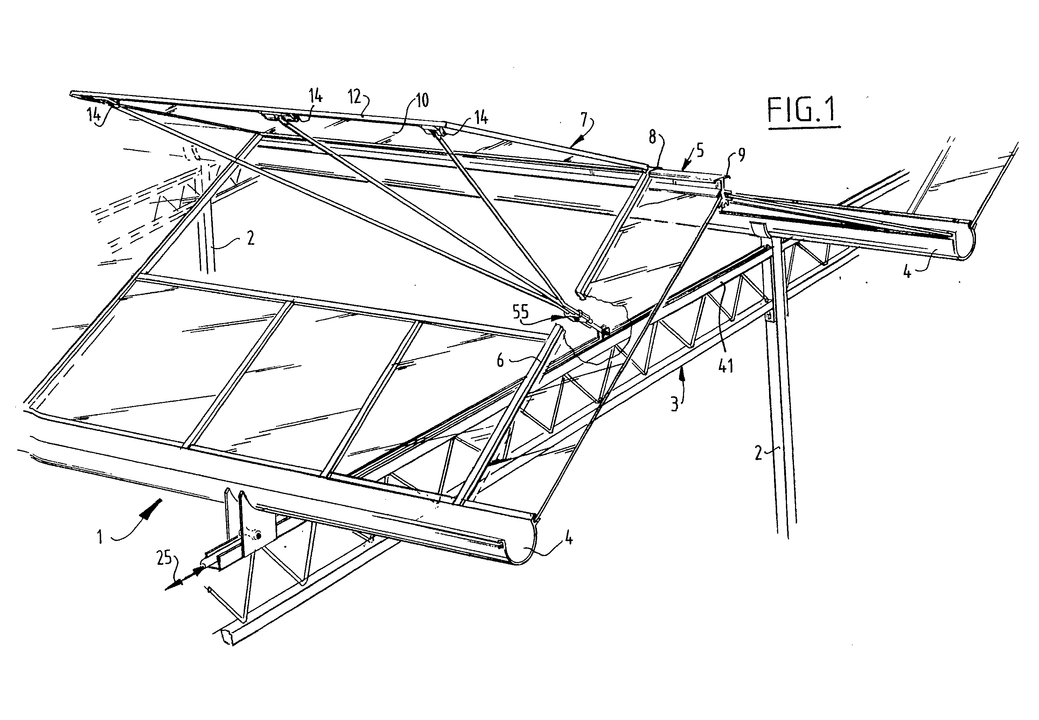

Figure 1 shows a perspective, broken away view of a fraction of a glasshouse;

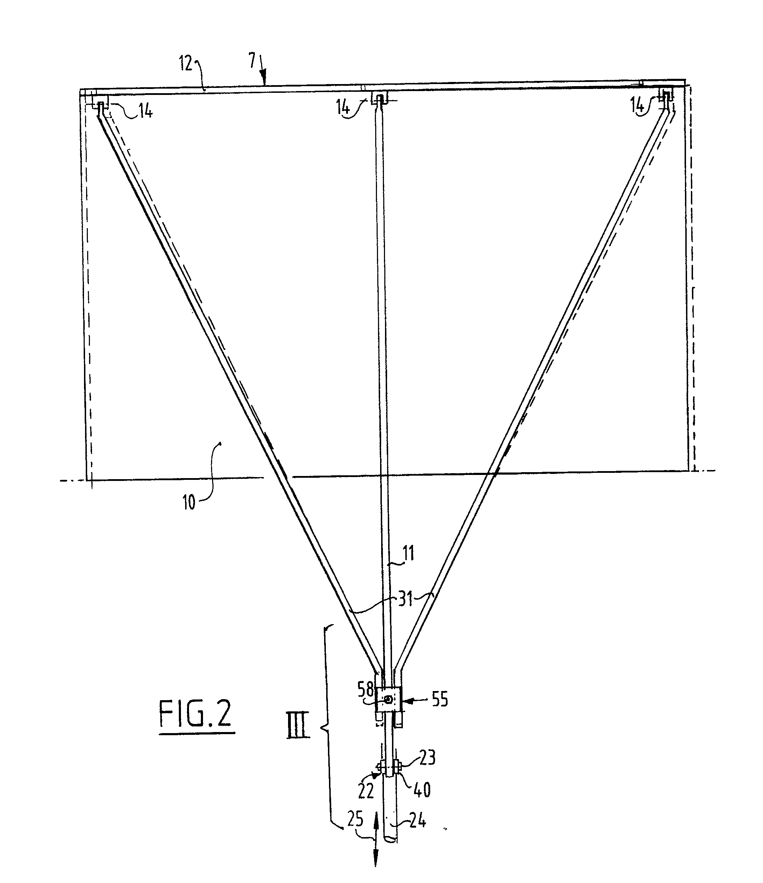

figure 2 is a view onto a window provided with a window operating device according to the invention;

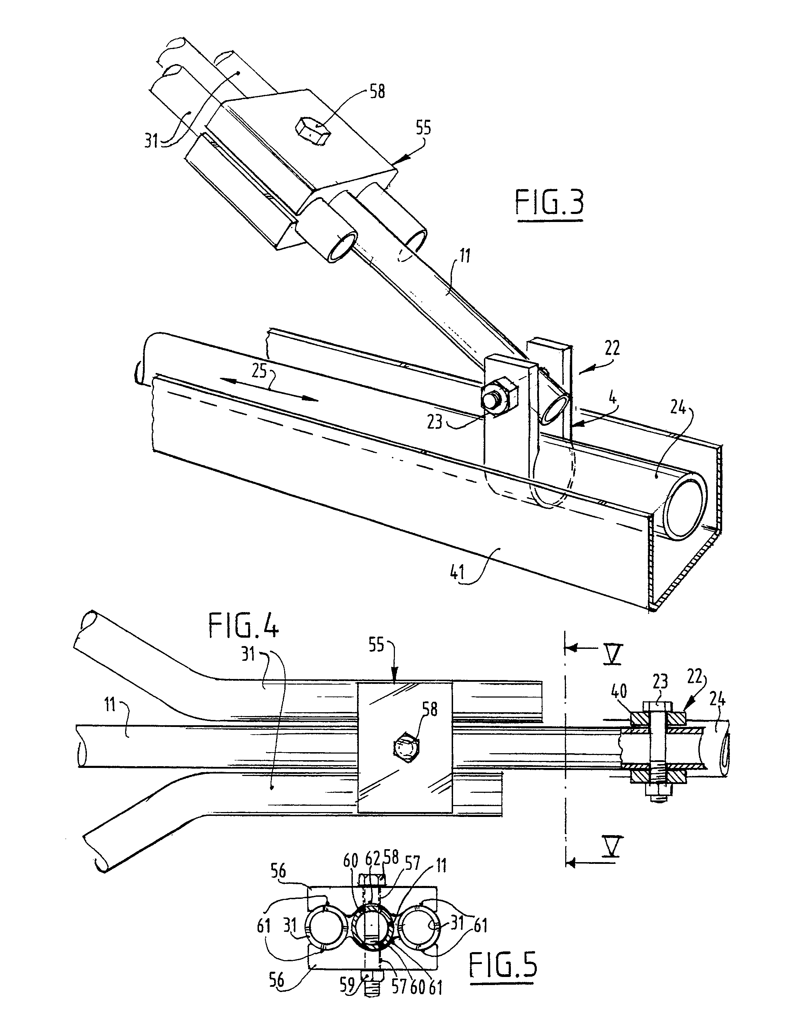

figures 3 and 4 show respectively a perspective view and a top view of fraction III of figure 2;

figure 5 is a section along the line V-V of figure 4; and

figure 6 shows a variant of fraction III.

A glasshouse 1 comprises a frame consisting of a system of pillars 2, trusses 3 supported by the pillars 2 and gutters 4 supporting thereon and connected via bars 6 to ridge profiles 5.

The glasshouse 1 comprises a considerable number of series of windows 7.

Each window 7 comprises a hinge profile 8 that is pivotable about the top flange 9 of the ridge profile 5, a glass sheet 10 and a gripping profile 12. The construction of the window 7 itself can be random. The window 7 can for instance consist substantially of only a glass sheet or a plastic plate. It is only of importance for the invention that the window 7, which can be large, is pivotable and that three opening rods, that is, a middle 11 and two outer rods 31, can grip thereon.

Each of the three opening rods 11, 31 engages via a hinge 14 onto the gripping profile 12.

The other ends of the opening rods 11, 31 grip pivotably via a clamp 55 onto a clamping bolt 23 of a coupling element 22 which is clamped fixedly by means of this same clamping bolt 23 onto an operating rod 24 which is displaceable according to arrows 25 by means of a controlled motor for closing or to a greater or lesser extent opening of a series of windows 7 which are all operated by this same operating rod 24. The motor (not drawn) can simultaneously adjust a plurality of operating rods 24 in identical manner via transmission mechanisms so that the climate remains uniform in the whole glasshouse through opening or closing in the same manner the windows 7 distributed over the glasshouse 1. The opening rods 24 are guided in their lengthwise direction, for example by guide rolls (not drawn) arranged from place to place. In order to make the opening of all windows 7 identical, each coupling element 22 can be adjusted in lengthwise direction of the operating rod 24 and clamped fixedly in the set position by means of the clamping bolt 23. The coupling element 22 consists of a robust U-shaped bracket 40 with a hollow for receiving the operating rod 24 and is pushed onto the operating rod 24 before the latter is fitted into a U-profile 41 of the truss 3. In order to make the aperture of the opened window 7 uniform in the case the roof of the glasshouse is deformed and/or in the case of one or other inaccurate assembly of the glasshouse, the opening rods 11 and 31 are automatically adjusted and joined to each other. This is carried out when the windows 7 are closed in order to achieve a good adjustment. This ensures that in the closed position the window 7 is not deformed and the accompanying danger of glass breakage is prevented. The means correcting the warped position consist of the clamp 55, which is built up of two profile-like, identical clamping pieces 56 manufactured from aluminium and having central holes 57 for close-fitting passage of a bolt 58 that is provided with a nut 59. The middle opening rod 11 is likewise provided with fitting holes 60 for passage of the bolt 58. The clamping pieces 56 are thus fixed on the opening rod 11 by means of the bolt 58. When the clamp 55 is unfastened the two outside opening rods 31 can be snapped in from the side between the clamp pieces 56 to be received in hollows 61 arranged in the clamp pieces 56. The central hollows 62 are slightly larger than the hollows 61 so that the round opening rods 31 are clamped fixedly in their hollows 61 when the tubular diameter of the three opening rods 11 and 31 is the same.

With the device according to the invention the opening rods 11 and 31 are not flattened at the coupling 53. They are torsion-stiff there, which contributes to the stability of the construction. The operating rod 24 is not subjected to torsional load, or hardly so.

The clamps 22 are preferably clamped fixedly to the operating rod 24 when the windows 7 are closed. A uniform adjustment can also be realized automatically therewith. When the operating rods 24 are very long, a correction could be necessary through some compression or elongation of the operating rods 24. The windows 7 are then all coupled on the operating rods 24 by fixed clamping of the coupling element 22 at a determined small aperture adjustment in order to ensure a uniform aperture adjustment.

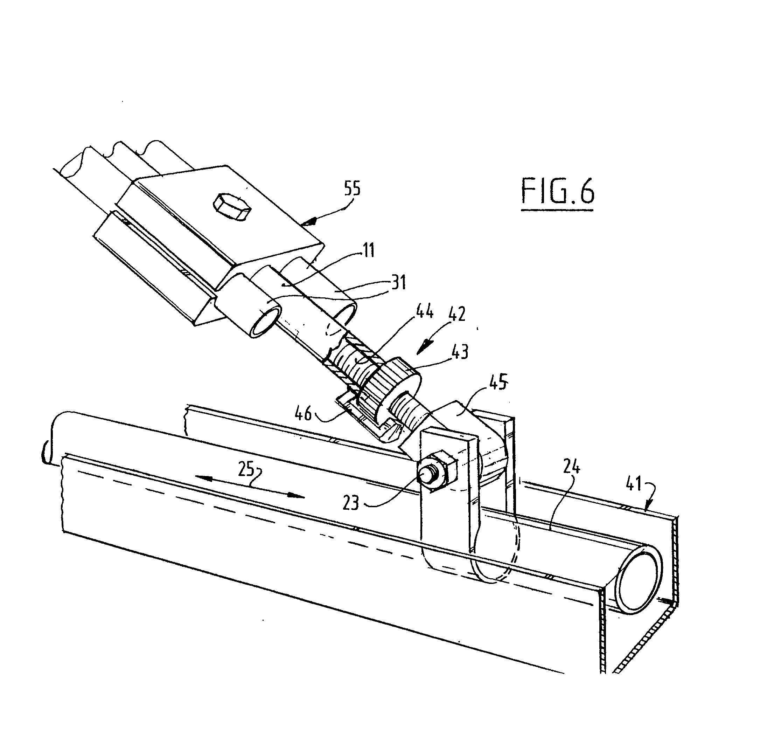

It is conceivable that the opening rod 11 as in figure 6 be provided with a length-adjustable setting means 42, consisting for instance of a threaded piece 44 with right and left hand thread 47 of a hinge piece 45 pivoting on a bolt 23, which hinge piece is screwed to a greater or lesser degree into the opening rod 11, wherein the position of the nut 43 relative to the opening rod 11 is determined by means of a bracket 46.

## Claims

1. Window operating device for a glasshouse (1) comprising per window (7) three opening rods (11, 31) which are connected via coupling means (22) to a window operating rod (24), **characterized in that** a clamp (55) consisting of two clamping jaws (53) is fixed on the middle opening rod (11) of the three opening rods (11, 31) by means of a clamping bolt (58) passing through the two clamping jaws (53) and this middle opening rod (11), while two outer opening rods (31) are clamped fixedly in hollows (61) arranged in the clamp on either side of the clamping bolt (58).

2. Window operating device as claimed in claim 1, **characterized in that** the clamp (55) has three adjacently arranged hollows (61, 62) for receiving opening rods (11, 31) of the same diameter, wherein the middle hollow (62) is larger than the two outer hollows (61).

3. Window operating device as claimed in claim 1 or 2, **characterized in that** the middle opening rod (11) grips pivotally onto a clamping bolt (23) of a bracket (40) clamping around a common operating rod (24).

4. Window operating device as claimed in claim 1, 2 or 3, **characterized in that** the middle opening rod (11) engages onto the operating rod (24) via a length-adjustable member (42).

FIG.1

EP 0 460 302 A1

FIG.2

FIG.3

FIG.4

FIG.5

FIG.6

EP 0 460 302 A1

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NL-A-7 602 847   (PRINS) — — — | 1,4 | A 01 G 9/24 F 16 B 7/04 |
| A | NL-A-7 808 213   (BOM) * page 7, line 17 - line 32; figure 4 * * — — — | 1 | |
| A | US-A-1 668 754   (BARNEY) * the whole document * * — — — — — | 1 | |

| | | | TECHNICAL FIELDS SEARCHED (Int. Cl.5) |
|---|---|---|---|
| | | | A 01 G F 16 B E 05 F |

The present search report has been drawn up for all claims

| Place of search | Date of completion of search | Examiner |
|---|---|---|
| The Hague | 20 August 91 | HERYGERS J.J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document